# EUROPÄISCHE PATENTSCHRIFT

(11) **EP 2 644 537 B1**
(45) Veröffentlichungstag und Bekanntmachung des Hinweises auf die Patenterteilung: **21.10.2015**
(21) Anmeldenummer: 12161434.1
(22) Anmeldetag: 27.03.2012
(51) Int. Cl.: B65G 1/127, G01N 35/04

(54) **Probenarchiv**
Sample archive
Archivage d'échantillons

(43) Veröffentlichungstag der Anmeldung: 02.10.2013
(73) Patentinhaber: GLP systems GmbH, 21079 Hamburg (DE)
(72) Erfinder: Hecht, Robert, 82418 Seehausen (DE); v. Froreich, André, 21149 Hamburg (DE)
(74) Vertreter: Raffay & Fleck

(56) Entgegenhaltungen:
- EP-A2- 1 321 386
- DE-A1-102009 041 219
- US-A- 5 921 739
- US-A1- 2002 102 149
- US-A1- 2008 003 083

## Beschreibung

Die Erfindung betrifft eine Vorrichtung zum Archivieren einer Vielzahl von in Probengefäßen enthaltenen Proben, insbesondere medizinischen und/oder biologischen Proben gemäß dem Oberbegriff des Patentanspruchs 1.

Es ist bekannt, dass nach einer erfolgten Analyse einer Probe, beispielsweise einer medizinischen Probe in einem medizinischen Analyselabor, diese Probe unter eindeutiger Aufrechterhaltung der Identifikation und Zuordnung zu einer Probenherkunft über einen gewissen Zeitraum gelagert werden muss, zu Belegzwecken und um beispielsweise Kontrollanalysen oder weitere Untersuchungen an der Probe vornehmen zu können. So werden im Bereich medizinischer Labdraufträge von den Auftrag gebenden Ärzten nicht selten medizinische Proben, beispielsweise Blutproben, mit zunächst einem beschränkten Analyseauftrag an ein medizinisches Analyselabor gegeben. Je nach Ausgang der Analyse fordert der Auftrag gebende Arzt eine weitergehende Untersuchung der Probe hinsichtlich zusätzlicher Analyseparameter. Mit derartigen zweistufigen Analyseaufträgen sollen Kosten auf Seiten der Auftrag gebenden Ärzte, die letztlich zu Lasten der Patienten gehen, eingespart werden.

Entsprechend kommt es im Bereich medizinischer Analyselabore, aber nicht nur dort, immer häufiger zu Situationen, in denen die jeweiligen Proben nicht nur archiviert, sondern aus einem Archiv auch wieder entnommen werden müssen. In Anbetracht der beträchtlich hohen Durchsätze in beispielsweise medizinischen Analyselabors und der nicht zuletzt aufgrund der geringen Entlohnung pro Analse in hohem Maße erforderlichen automatisierten Abwicklung, besteht hier ein Bedarf, ein Archivsystem zu schaffen, welches für die Aufnahme einer Vielzahl von Proben kompakt ausgebildet ist und zudem eine zügige und gezielte Entnahme einzelner Proben für eine Nachbearbeitung erlaubt.

Die Proben, insbesondere medizinische und/oder biologische Proben, werden dabei typischerweise in Probengefäßen aufbewahrt, bei denen es sich vielfach um Röhrchen oder sogenannte Viale handelt. Entsprechende Probenarchive für die Archivierung einer großen Zahl derartiger Probengefäße und darin enthaltener Proben verfügen entsprechend über tablettartige Probenträger, in denen eine Vielzahl von Aufnahmen zur Aufnahme einzelner Probengefäße, insbesondere derartiger Röhrchen bzw. Viale, angeordnet sind. Diese tablettartigen Probenträger werden dann unter Ausnutzung sowohl der räumlichen Breite und Tiefe als auch der räumlichen Höhe in einem Archivraum angeordnet.

Ein Beispiel eines solchen Archivierungs- bzw. Lagerungssystems ist in der US 2007/0172396 A1 offenbart. Dort ist das Innere eines Archivraumes über eine Schleuse zum Ein- bzw. Ausschleusen von Proben bzw. von mit den Proben bestückten Probengefäßen oder mit den Probengefäßen versehenen tablettartigen Probenhaltern zugänglich. In dem Archivraum ist ein nach Art eines Paternoster ausgebildetes, in zwei vertikalen Reihen umlaufenes Fahrstuhl- bzw. Karussellsystem angeordnet, welches eine Vielzahl von an einem entsprechend endlos umlaufenden Antriebsstrang aufgehängten Aufnahmeschubladen aufweist. Aufgrund einer gelenkigen Anordnung an dem Antriebssystem können die Aufnahmeschubladen an Umkehrpunkten in einem oberen Abschnitt und einem unteren Abschnitt des "Pater Noster" in einer Weise umlaufen, dass der Boden der Fächer stets nach unten weist. In diese Fächer werden die entsprechenden zu lagernden Proben eingestellt. Zum Einlagern wird der umlaufende Antrieb solange bewegt, bis ein Fach mit einem freien Stellplatz gegenüber der Schleuse zu liegen kommt, so dass ein Probengefäß bzw. ein Probenhalter mit einer Vielzahl von Probengefäßen nach Durchgang durch die Schleuse darin abgelegt werden kann. Soll eine bestimmte Probe aus dem Archivsystem entnommen werden, so wird das Fach, in dem ein Probenhalter, der die Probe enthält, gelagert ist, durch Bewegen des Antriebes und der darin aufgehängten Fächer vor die Schleuse gefahren, der Probenhalter wird entnommen und ausgeschleust.

Nachteilig bei diesem System ist einerseits, dass für die Realisierung des umlaufenden Antriebes insbesondere in einem oberen und einem unteren Abschnitt des Archivraumes jeweils ein großes Volumen für die Umkehrbereiche vorzusehen ist, welche Volumina nicht für die Einlagerung von Proben zur Verfügung stehen. Mit anderen Worten ist hier das Verhältnis der Zahl der möglichen einzulagernden Proben zu dem erforderlichen Volumen des Aufnahmeraumes vergleichsweise ungünstig, eine Lagerdichte der Proben entsprechend gering. So können also entweder in einem begrenzten Raum nur Proben in geringerer Zahl gelagert werden oder aber für die Einlagerung einer bestimmten Anzahl von Proben ist ein größerer Stauraum vorzusehen mit den entsprechend damit verbunden Kosten. Insbesondere bei einer kühlpflichtigen Lagerung von Proben, wie sie für verschiedene medizinische oder biologische Proben erforderlich ist, führt ein solch ungünstiges Volumenverhältnis zudem zu erhöhten Betriebskosten, da für die Einlagerung einer vergleichsweise geringen Zahl von Proben die Kühlung eines vergleichsweise großen Innenvolumens erforderlich ist.

Zudem ergeben sich vergleichsweise lange Ausgabezeiten von Proben, wenn insbesondere bei vergleichsweise voll befülltem Archiv hintereinander zwei auf unterschiedlichen Fachebenen gelagerte Proben entnommen werden müssen. Wenn nämlich beispielsweise auf einem ersten Abstellplatz in einem ersten Fach ein vergleichsweise großer Probenträger zu entnehmen ist, so kann das System nicht schon für die Entnahme eines weiteren Probenhalters aus einem anderen Fach den Antrieb der Fächer weiter bewegen und die Fächer umschichten, wenn auf dem weiteren Fach nur ein kleinerer Probenträger entnommen werden soll. Jedenfalls kann dann nach einem Handling der erste Probenträger, von dem eine Probe entnommen worden ist, nicht einfach wieder in das Archiv rücküberführt werden, vielmehr muss wieder dasjenige Fach vor die Schleuse gefahren werden, welches einen Aufnahmeplatz für den Probenträger bietet. Insbesondere bei kühlpflichtigen Proben wird damit die Verweildauer innerhalb der Schleuse, die in der Regel nicht gekühlt ist, verlängert und es kann zu einer übermäßige Erwärmung der weiteren auf dem Probenträger vorhandenen Proben und damit zu einer eventuellen Schädigung derselben kommen.

In einem zweiten Ausführungsbeispiel dieser Schrift ist ein alternatives System beschrieben, welches insbesondere für in der Aufbewahrung tiefkühlpflichtige Proben Anwendung finden soll. Dort ist in einem tiefgekühlten Archivraum ein Regalsystem aus starr übereinander liegenden Fächern oder Schubladen vorgesehen, welche lediglich eine horizontale Entnahme eines Probenträgers ermöglichen. Zu einer Seite hin ist der Archivraum mit vertikal verschiebbaren Isolierelementen verschlossen. An dieser Seite ist außerhalb des eigentlichen, durch die Isolierelemente begrenzten Archivraumes ein Entnahmemanipulator vorgesehen, der in vertikaler Richtung bewegbar ist, um eine höhere oder auch tiefer gelegene Position anzusteuern, auf der ein zu entnehmender Probenträger angeordnet ist. Dieser Manipulator weist zudem einen Hubmechanismus auf, der über entsprechende Angriffe an den Isolationselementen jeweils mit einem dieser Isolationselemente in Eingriff gebracht werden und dieses Isolationselement sowie die darauf auflastenden Isolationselemente in vertikaler Richtung zur Ausbildung einer Öffnung in der aus den Isolationselementen gebildeten Isolierwand verschieben kann. Durch diese Öffnung hindurch wird dann ein entsprechender Probenträger aus dem Regalsystem entnommen.

Diese Lösung erlaubt zwar eine kompakte Lagerung der Proben in dem eigentlichen Archivraum, bedingt allerdings eine groß dimensionierte Schleuse, da dort ein Entnahmesystem in der Höhe verfahrbar angeordnet sein muss, einen entsprechenden Bauraum in vertikaler Richtung erfordert. Auch hier kommt es also zu einem ungünstigen Raum-/Nutzungsverhältnis mit den damit verbundenen überhöhten Kosten.

Ein weiteres nach Art eines Paternoster arbeitendes Archivsystem ist aus der WO 2009/077465 A1 bekannt. Dieses bringt ebenfalls die bereits im Zusammenhang mit dem ersten Ausführungsbeispiel der US 2007/0172396 A1 beschriebenen Nachteile mit sich.

Eine weitere bekannte Möglichkeit der Archivlagerung von Proben ist in der US 7,214,023 B2 beschrieben. Ein dort gezeigtes Probenarchiv ist nach Art eines Hochregallagers aus bekannten Logistikanwendungen aufgebaut. Es verfügt über eine Vielzahl von nebeneinander und vertikal übereinander angeordneten Regalstellflächen, auf denen entsprechende Probenhalter mit Probengefäßen abgestellt werden. Ein Entnahmesystem kann sich zwischen den Regalstellflächen bewegen in vertikaler wie auch in horizontaler Richtung und damit einzelne Probenträger aus dem Lager entnehmen.

Auch hier ergibt sich der Nachteil, dass für die Fahrten des Entnahmesystems ein Raum freizuhalten ist, der als Lagerraum in dem Archivraum entfällt, so dass nur eine ungünstige Ausnutzung des Archivraumes im Verhältnis zu der Anzahl der darin einzulagernden Proben gegeben ist. Dies wirkt sich insbesondere dann kostenungünstig aus, wenn der Archivraum zu kühlen ist.

Ein - nicht explizit für die Lagerung von Laborproben beschriebenes - Lagersystem, das die Merkmale des Oberbegriffs des Anspruchs 1 aufweist, ist in der US 2008/0003083 A1 beschrieben. Bei dem dortigen System werden Aufnahmekassetten unmittelbar übereinander gestapelt in zwei benachbarten und aneinander angrenzenden Stapeln verwahrt und können mit Hilfe eines Umschichtsystems umgeschichtet werden. Die dort offenbarten Kassetten sind geräumig und nehmen vergleichsweise viel Raum ein, so dass eine kompakte Einlagerung von Probengefäßen in diesem Lagersystem nicht zu erreichen ist.

Ausgehend von diesem bekannten Stand der Technik und den oben bezeichneten Archivsystemen ist es Aufgabe der Erfindung, eine Vorrichtung zum Archivieren einer Vielzahl von in Probengefäßen enthaltenden Proben, insbesondere medizinischen und/oder biologischen Proben mit den Merkmalen des Oberbegriffs des Patentanspruches 1 dahingehend weiterzubilden, dass dieses eine besonders kompakte Lagerung der Proben in einem Archivraum gestattet bei gleichzeitiger zuverlässiger und schneller wie einfacher Zugänglichkeit der eingelagerten Proben zur Entnahme eines ausgewählten Probengefäßes.

Diese Aufgabe wird gelöst durch eine Vorrichtung zum Archivieren einer Vielzahl von Probengefäßen mit den Merkmalen des Patentanspruches 1. Vorteilhafte Weiterbildungen der erfindungsgemäßen Vorrichtung sind in den abhängigen Ansprüchen 2 bis 9 angegeben.

Unter Bezugnahme der Beschreibung der erfindungsgemäßen Vorrichtung, weist eine solche Vorrichtung zum Archivieren einer Vielzahl von in Probengefäßen enthaltenden Proben, insbesondere medizinischen und/oder biologischen Proben, zunächst und in Übereinstimmung mit dem bekannten Stand der Technik einen über eine Schleuse zum automatischen Ein- und Ausschleusen von Probengefäßen zugänglichen Archivraum auf. In diesem Archivraum ist ein Lager- und Umschichtsystem für Probengefäße angeordnet, welches Probentabletts aufweist, die im Unterschied zu den Probenkassetten bei dem System nach der US 2008/0003083 A1 jeweils eine Vielzahl von auf einer Aufnahmefläche angeordneten Aufnahmen für Probengefäße aufweisen. Die Aufnahmen sind dabei insbesondere für die Aufnahme jeweils eines einzigen Probengefäßes gestaltet, beispielsweise im Wesentlichen zylinderförmige Aufnahmeöffnungen zur Aufnahme von röhrchenförmigen Probengefäßen, wobei in den Aufnahmen typischerweise Haltevorrichtungen zum sicheren Halten der Probengefäße angeordnet sein werden.

Bei der erfindungsgemäßen Vorrichtung weisen die Probentabletts ferner Stapeleinrichtungen auf, auf welchen zum Bilden eines Probentablettstapels jeweils ein weiteres Probentablett unter Belassung eines Abstandes zu der Aufnahmefläche des darunter liegenden Probentabletts abstellbar ist. Dabei wird ein oberes Probentablett unmittelbar auf dem unteren Probentablett abgestellt, ohne dass diese Tabletts etwa durch Aufhängen an einer Antriebsvorrichtung übereinander angeordnet werden, jedoch mit Belassung jeweils eines Zwischenraumes zwischen den Tabletts. Die Stapeleinrichtungen sorgen lediglich dafür, dass die Aufnahmeflächen der übereinander angeordneten Probentabletts einen Abstand zueinander aufweisen. Dieser Abstand ist erforderlich, da mit der Aufnahme der Probengefäße diese sich zu einem oberhalb der Aufnahmefläche liegenden Niveau erstrecken und das auf einem mit Probengefäßen bestückten Probentablett abgestellte nächste Probentablett nicht etwa auf den Probengefäßen aufliegen, sondern lediglich auf den Stapeleinrichtungen ruhen soll.

Um nun die Probentabletts in dem Archivraum bewegen und damit gezielt ein eine ausgewählte Probe bzw. ein entsprechendes Probengefäß enthaltendes Probentablett durch die Schleuse entnehmen bzw. ein neues Probentablett einstellen zu können, ist weiterhin in dem Lager- und Umschichtsystem Aufnahmeraum für wenigstens zwei angrenzend nebeneinander angeordnete Probenstapel vorgesehen und es sind zwei solche nebeneinander angeordnete Probenstapel vorhanden, und das Lager- und Umschichtsystem weist Hubmittel zum vertikalen Abheben von einem oder mehreren auf einem ausgewählten Probentablett aufgestapelten weiteren Probentablett(s) von dem ausgewählten Probentablett sowie Transfermittel zum horizontalen Überführen eines Probentabletts von einem in den anderen Stapel und/oder von einem der Stapel in die Schleuse und/oder von der Schleuse in einen der Stapel auf. Selbstverständlich können auch mehr als eine Schleuse vorhanden sein, z.B. zwei an einander gegenüberliegenden Seiten des Archivraums angeordnete Schleusen, durch jeweils Probentabletts ein- bzw. ausgeschleust werden können.

Somit unterscheidet sich die erfindungsgemäße Vorrichtung von den aus dem Stand der Technik als explizit für die Lagerung von Laborproben beschriebenen und bekannten Lösungen einerseits (und gegenüber der nach Art eines Paternoster arbeitenden Lösung gemäß der US 2007/0172396 A1 bzw. der WO 2009/077465 A1) dadurch, dass gerade kein laufender Antrieb angeordnet ist, an dem Aufnahmen für Probentabletts vorgesehen und angeordnet sind und der einen umfangreichen Bauraum insbesondere im Bereich der oberen und unteren Umkehrpunkte des umlaufenden Antriebssystems benötigt. Vielmehr sind bei der erfindungsgemäßen Lösung die Probentabletts in den nebeneinander angeordneten Stapeln unmittelbar aufeinander abgestellt und somit maximal dicht gepackt. Dies gilt insbesondere auch in einem bodennahen unteren Bereich sowie einem gegenüberliegenden oberen Abschnitt des Archivraumes. Für das Bewegen des Probentabletts aus einem Stapel heraus entweder in einen anderen Stapel oder aber durch die Schleuse hindurch nach außerhalb des Archivraumes genügen vergleichsweise geringe Freiräume, um die auflastende Probentabletts angehoben und das zu verschiebende Probentablett selbst ggf. abgehoben werden müssen. Der hierfür vorzusehende Freiraum, der bedingt durch die Bauart im oberen Bereich des Archivraumes anzuordnen bzw. vorzusehen ist, ist bereits mit einer vollständigen Höhe eines Probentabletts (inklusive der Stapeleinrichtungen) ausreichend angegeben, kann sogar geringer bemessen werden. Da auch die Probentabletts selbst unmittelbar und ohne Zwischenfügung weiterer Elemente aufeinandergestapelt werden können, ergibt sich auch hier eine optimale Ausnutzung des vorhandenen Raumes. Bei der vorbekannten Lösung nach Art eines "Paternoster" sind die einzelnen Probentabletts in Halterungen derart angeordnet, dass zwischen den Probentabletts noch ein größerer Spielraum besteht, so dass auch hier eine Raumverschwendung zu konstatieren ist.

Im Vergleich zu der alternativen bekannten und für die Lagerung von Laborproben explizit beschriebenen Lösung mit feststehenden Probentabletts in einem Aufnahmeraum, also einerseits nach dem zweiten in der US 2007/0172396 A1 offenbarten Ausführungsbeispiel mit einer aus verschiebbaren Elementen aufgebauten isolierenden Wand des Archivraumes und einem vertikal bewegbaren Entnahmegerät bzw. einer wie in der US 7,214,023 B2 offenbarten Lösung eines "Hochregallagers" besteht der Vorteil ebenfalls in einer deutlich kompakteren Bauweise, da beide Einrichtungen, nämlich einerseits eine Schleuse mit einer möglichen Entnahmeeinrichtung und andererseits der Archivraum selbst bei der erfindungsgemäßen Lösung besonders kompakt gestaltet werden können dadurch, dass die Probentabletts bewegt und umgeschichtet werden können mit minimalem Platzaufwand für eine einzustellende Lücke zwischen solchen Probentabletts, die gegeneinander verschoben werden sollen. Die entsprechende Einstellung eines Raumes für das Manipulieren eines Probentabletts von einem Stapel in den anderen und/oder von einer Schleuse in den Stapel oder umgekehrt, besorgen die erfindungsgemäß vorgesehenen Hubmittel, den horizontalen Transfer besorgen die Transfermittel.

Als Transfermittel, mit denen ein Probentablett aus einer ersten horizontalen Position, z.B. in einem ersten Stapel, in eine zweite horizontale Position, z.B. in einem zweiten Stapel, verbracht werden können, sind erfindungsgemäß solche vorgesehen, die wenigstens eine Bahn, an den Probentabletts angeordnete Rollen sowie Mittel zum Verschieben eines mit den Rollen auf der Bahn ruhenden Probentabletts entlang der Bahn aufweisen. Denn eine derartige Ausgestaltung ist vergleichsweise wartungsarm und erfordert keinen aufwendigen Einbau von umfangreichen und kleinteiligen Aggregaten.

Die Vorrichtung nach der Erfindung zeichnet sich nun ferner dadurch aus, dass die Stapeleinrichtungen der Probentabletts im Wesentlichen senkrecht zu der Aufnahmefläche nach oben weisende Streben aufweisen, an deren oberen Ende jeweils ein Rollenpaar angeordnet ist. Das jeweilige Rollenpaar weist dabei zueinander parallele Drehachsen auf und ist unter Belassung eines Zwischenraumes angeordnet. Die Drehachsen der Rollenpaare weisen dabei jeweils einen gleichen Abstand zu der Aufnahmefläche auf. Darüber hinaus verfügen die Probentabletts über auf einer Unterseite angeordnete Rollen, die so positioniert und dimensioniert sind, dass diese auf der Unterseite angeordneten Rollen beim Aufsetzen eines Probentabletts auf ein anderes Probentablett zur Stapelbildung derart auf dem an den Streben angeordneten Rollenpaaren zu liegen kommen, dass zumindest eine der auf der Unterseite angeordneten Rollen eines oberen Probentabletts in dem Zwischenraum eines Rollenpaares an der Strebe eines unteren Probentabletts ruht und darin gegen ein horizontales Verlagern des oberen Probentabletts gesichert gehalten wird. Gehalten wird die auf der Unterseite angeordnete Rolle des Probentabletts dabei durch die seitlichen Flächen der an den Streben angeordneten Rollen.

Durch diese Bauweise wird zweierlei erreicht:
Zum einen erlaubt diese Gestaltung eine sichere und ausgerichtet Stapelung der Probentabletts in vertikaler Richtung und damit die Bildung der wenigstens zwei Stapel in entsprechend dichter und kompakter Stapelweise. Zum anderen ermöglichen die Rollen ein vertikales Verlagern der einzelnen Probentabletts mittels der Transfermittel, nachdem das zu transferierende Probentablett mittels der Hubmittel von benachbarten Probentabletts gelöst und gegenüber diesen freigestellt worden ist. Hierbei können nun, wie insbesondere bei einem Transfer im unteren Bereich, also am Boden des Archivraumes bzw. des Aufnahmeraumes vorgesehen, die an der Unterseite des Probentabletts angeordneten Rollen zum Einsatz kommen oder aber auch die am oberen Ende der Streben angeordneten Rollen, die dann auf entsprechenden Bahnen abgehängt laufen, wie etwa bei einer Seilbahn. Insbesondere sind bei rechteckig oder quadratisch geformten Probentabletts im Bereich der vier Ecken, insbesondere an den Längsseiten jeweils eine Rolle an der Unterseite und jeweils ein Rollenpaar am Ende einer dort angeordneten Strebe angeordnet, also insgesamt vier Rollen auf der Unterseite eines Probentabletts und acht Rollen, nämlich vier Rollenpaare, an den oberen Enden der Streben.

Sofern eine gekühlte Archivierung der Proben vorzusehen ist, kann der Archivraum eine Kühlung aufweisen bzw. mit einem entsprechenden Kühlaggregat verbunden sein (vgl. Anspruch 7). Hierbei hat sich herausgestellt, dass die erfindungsgemäße Vorrichtung derart kompakt aufgebaut werden kann, dass in einem herkömmlichen Industrie- bzw. Gewerbekühlschrank, beispielsweise einem solchen der Firma Liebherr, der Außenabmessungen von 1,4 m Breite, 0,7 m Tiefe und 2 m Höhe aufweist, damit Innenabmessungen von etwa 1,2 m Breite, 0,5 m Tiefe und 1,8 m Höhe des Kühlraumes insgesamt 21 Probentabletts angeordnet werden können mit einem Bestückungsraum von ungefähr 500 Probengefäßen, insbesondere Probenröhrchen, pro Probentablett. Es ergibt sich somit eine Lagerkapazität in einem derartigen Schrank von ungefähr 10.500 Proben. Eine derart kompakte und dichte Lagerung von Proben auf so engem Raum war bis dato unbekannt. Zudem schafft die Möglichkeit, hier auf bereits bestehende Gewerbe- bzw. Industriekühlschränke als Archivräume zurückzugreifen, die dann lediglich mit einer entsprechenden Einrüstung des erfindungsgemäßen Lager- und Umschichtsystems mit Hubmitteln, Transfermitteln und den gestapelten Probentabletts versehen werden müssen, eine besonders kostengünstige Alternative zur Umsetzung der Erfindung und Bildung einer solchen Vorrichtung zum Archivieren von Proben, die im Vergleich zu den im Stand der Technik bisher zur Umsetzung erforderlichen Speziallösungen deutlich wirtschaftlicher ist.

Die Mittel zum Verschieben eines Probentabletts können beispielsweise Pneumatik- oder Hydraulikzylinder sein mit entsprechenden an dem pneumatisch oder hydraulisch betätigten Stempel angeordneten Angriffsstrukturen zum Angreifen an einem Probentablett und Verschieben desselben entlang der horizontalen Transferrichtung. Auch sind hier z.B. Zahnradantriebe denkbar, mit einem Zahnrad, welches zum Verschieben des Probentabletts an eine entsprechende gezahnte Struktur, beispielsweise einer Zahnstange, an dem Probentablett angreift und dieses so in horizontaler Richtung auf der wenigstens einen Bahn bewegt. Diese wenigstens eine Bahn ist dabei insbesondere für ein reibungsarmes Zusammenwirken mit den Rollen an den Probentabletts ausgelegt. Eine solche Bahn kann z.B. eine glatte Metall- oder Kunststofffläche oder dgl. sein.

Für die erfindungsgemäße Vorrichtung ist es ferner von Vorteil, wenn wenigstens zwei Bahnen angeordnet und als weiterer Bestandteil der Transfermittel vorgesehen sind, auf denen die Rollen laufen bzw. abrollen, wenn ein horizontaler Transfer eines Probentabletts von einer ersten in eine zweite Position stattfindet. Diese Bahnen können dabei gemäß einer weiteren vorteilhaften Ausgestaltung der Erfindung verlagerbare Abschnitte aufweisen, die bei einer Aktivierung des Transfermittels zum horizontalen Überführen eines Probentabletts zum Vervollständigen der Bahnen verlagert werden, ansonsten in einer Parkposition, in der die Bahnen unterbrochen sind, ruhen. Derartige verlagerbare Abschnitte in den Bahnen sind insbesondere dann von Vorteil, wenn die Bahnen an sich in einen vertikalen Bewegungsweg der Probentabletts, insbesondere ihrer Rollen hineinragen, also beim Anheben bzw. Absenken eines Probentabletts bzw. eines Stapels oder Teilstapels von Probentabletts im Wege wären. Mittels der zuletzt beschriebenen Lösung können bei einem entsprechenden vertikalen Verlagern der Probentabletts die verlagerbaren Abschnitte in der jeweiligen Parkposition ruhen, so dass die Rollen vertikal frei passieren können. Hat ein über die Bahnen in horizontaler Richtung zu verlagerndes Probentablett die Position erreicht, auf der es über die Bahn verlagert werden soll, so werden die verlagerbaren Abschnitte zum Vervollständigen der Bahnen aus der Parkposition heraus verlagert und die vollständigen Bahnen gebildet. Diese entsprechenden verlagerbaren Abschnitte der Bahnen können dabei verschwenkt, verschoben oder in sonstiger Weise verlagert werden, wozu insbesondere automatisch ansteuerbare Antriebe, z.B. Pneumatik- oder Hydraulikzylinder oder motorische Antriebe vorgesehen sind.

Bei der erfindungsgemäßen Vorrichtung sind bevorzugt in dem Lager- und Umschichtsystem Hub- und Transfermittel jeweils in einem oberen und einem unteren Bereich des Aufnahmeraumes derart angeordnet, dass von den beiden Stapeln Probentabletts jeweils ein oberstes Probentablett von den weiteren Probentabletts in dem jeweiligen Stapel angehoben und in den jeweils anderen Stapel, insbesondere dort an eine oberste Position, überführt werden kann und dass in beiden Stapeln jeweils die auf einem untersten Probentablett auflastenden weiteren Probentabletts und/oder der gesamte Stapel abgehoben und ein unterstes Probentablett aus einem Stapel in den anderen Stapel, insbesondere in dessen unterste Position überführt werden kann. Damit wird die Möglichkeit einer rotierenden Umschichtung der Probentabletts in zwei benachbarten Stapeln erreicht, wobei ein entsprechender Umlauf in beiden Rotationsrichtungen, also im Uhrzeigersinn und entgegen desselben erfolgen kann. Grundsätzlich ist es hierbei auch möglich, nicht nur zwei, sondern auch einen dritten oder noch weitere Stapel vorzusehen, wobei dann Übergabestellen zur Überführung eines Probentabletts zwischen den Stapeln an Position 1 und 2 wie auch zwischen den Stapeln an Position 2 und 3 vorzusehen sind, um die entsprechenden Probentabletts in jedem Fall zu einer Schleuse, die beispielsweise nur angrenzend an den Stapel Nr. 1 vorgesehen ist, verbringen zu können. Bei einer solchen Anordnung kann es sich auch anbieten, eine zweite Schleuse auf einer der Seite mit der ersten Schleuse gegenüberliegenden Seite des Archivraums vorzusehen, so dass aus Stapeln an den Position 1 und 3 Probentabletts entnommen oder in diese Stapel Probentabletts einsortiert werden können.

Vermittels der Hub- und Transfermittel können Probentabletts beispielsweise in zwei angrenzend zueinander aufgeschichteten Tablettstapeln sehr schnell umgeschichtet und so bewegt werden, dass ein bestimmtes Probentablett, welches beispielsweise eine bestimmte, aus dem Archiv zu entnehmende Proben trägt, in Richtung der Schleuse bewegt und schließlich aus dieser mittels eines Transfermittels ausgeschleust werden kann. Dabei ist es mit Vorteil bei der erfindungsgemäßen Umsetzung und Ausgestaltung möglich, dass während das ausgeschleuste Probentablett weiterverarbeitet wird, beispielsweise die zu entnehmende Proben bzw. das Probengefäß von dem Probentablett entnommen wird, im Inneren des Archivraumes bereits einen weiteren Auftrag zur Entnahme beispielsweise eines weiteren Probengefäßes, welches auf einen anderen Probentablett angeordnet ist, soweit vorbereitet wird, als dass die Stapel mit den Probentabletts erneut wie oben beschrieben umgeschichtet werden, bis ein nachfolgend auszuschleusendes Probentablett im Bereich der Schleuse positioniert ist. Da insbesondere das zunächst entnommene Probentablett nicht wieder in die exakt gleiche Position einsortiert werden muss, vielmehr an beliebiger anderer Stelle zwischen zwei Probentabletts verbracht werden kann, kann dieses eingeschleust werden, und es kann im Nachgang das bereits im Bereich der Schleuse befindliche weitere Probentablett sehr schnell ausgeschleust und die nächst Probe zügig entnommen werden.

Sofern die Schleuse im Bereich eines oberen bzw. unteren Endes des Aufnahmeraumes angeordnet ist, kann mit den wie vorstehend beschrieben dort angeordneten Hub- und Transfermittel nicht nur eine Übergabe zwischen den Stapeln, sondern auch ein Ein- und Ausschleusen von Probentabletts unternommen werden. Es kann sich allerdings für einzelne Anwendungen als praxistauglich oder günstig erweisen, wenn eine Schleuse im mittleren Bereich bezogen auf die vertikale Höhe eines Probentablettstapels angeordnet ist. Dann sollten, wie gemäß Anspruch 8 und der darin offenbarten vorteilhaften Weiterbildung vorgesehen, im Bereich des der Schleuse zugewandten Stapels von Probentabletts in einem in vertikaler Richtung gesehen mittleren Abschnitt Hub- und Transfermittel derart angeordnet sein, dass mit den Hubmitteln ein oberhalb eines in einer Ausgabeposition vor der Schleuse befindlichen Probentabletts befindliches weiteres Probentablett bzw. mehrere solcher weiteren Probentabletts angehoben und ferner ein in der Ausgabeposition befindliches Probentablett von einem darunter befindlichen Probentablett abgehoben und von diesem gelöst werden kann. Darüber hinaus geschieht die Anordnung so, dass anschließend mit den Transfermitteln dieses so freigestellte Probentablett durch die Schleuse ausgeschleust werden kann. Anders herum für ein Einschleusen sind die in dem genannten Abschnitt angeordneten Hub- und Transfermittel so angeordnet, dass durch Anheben eines Teilstapels von Probentabletts mittels der Hubmittel in der Ausgabeposition ein Freiraum geschaffen werden und mittels der Transfermittel durch die Schleuse ein Probentablett in diesen Freiraum verschoben werden kann.

Grundsätzlich können die Hubmittel so ausgebildet sein, dass sie angehobene Probentabletts oder entsprechende Tablettstapel bzw. Tablettteilstapel durchgehend halten. Derartige Hubmittel können beispielsweise mit gabelartigen Manipulierelementen unter einen Rand eines Probentabletts greifen und z.B. über Hydraulik- oder Pneumatikzylinder angetrieben oder aber motorisch bewegt die Manipuliermittel und damit die entsprechenden Pröbentabletts anheben. Alternativ können aber auch andere Hubmittel Verwendung finden.

Da insbesondere die Hubmittel in ihrer Zahl gering gehalten werden sollen und zugleich in mehreren aufeinanderfolgenden Schritten unterschiedliche Teilstapel von Probentabletts, gesamte Stapel oder aber einzelne Probentabletts anheben müssen, kann es von Vorteil sein, dass die Vorrichtung aktivierbare und deaktivierbare Abstellelemente aufweist zum temporären Abstellen eines mit dem Hubmittel angehobenen Probentablett (Teil)-Stapels bzw. eines einzelnen Probentabletts, das als solches auch als ein nur eine Einheit umfassender Teilstapel aufgefasst werden kann. Derartige Abstellelemente können beispielsweise in vorgesehenen Abstellpositionen aus einem den Aufnahmeraum umgebenden Gerüst heraus in den Bereich des Aufnahmeraumes verschwenkt und/oder auf andere Weise verlagerbare Stege oder Riegel sein, die in einem in den Aufnahmeraum hinein verschobenen Zustand, in dem sie aktiviert sind, eine Ablage des Probentabletts auf derartigen Elementen gestatten.

Für die Organisation und den Betrieb der erfindungsgemäßen Vorrichtung sollte diese mit Vorteil eine Steuerung mit einem Speicher zum Speichern der jeweiligen Position eines Probengefäßes auf einem zugehörigen Probentablett sowie der Position des zugehörigen Probentabletts in den Probentablettstapeln aufweisen.

Natürlich ist es für eine rückführbare Archivierung einer Probe bzw. eines Probengefäßes unabdingbar, dass dessen Position gekannt ist. Insoweit wird die Position eines Probengefäßes, an der dieses auf einem Probentablett abgestellt ist, verzeichnet und in einer Steuerung gespeichert. Ebenso wird das Probentablett selbst bzw. seine Position in der Steuerung gespeichert. Dies kann beispielsweise dadurch geschehen, dass die Steuerung die Transferbewegungen von Probentabletts zwischen den Stapel und die Hubbewegungen, damit also das Entlangwandern eines Probentabletts in einem zirkulären Durchlauf durch die Tablettstapel speichert und auch sein Ein- bzw. Ausschleusen und sich allein aufgrund dieser Daten die jeweilige Position des Probentabletts "merkt". Alternativ oder auch zusätzlich können die Probentabletts mit Identifikationsmarkierungen, beispielsweise RFID-Tags oder Barcodes oder dgl. versehen werden, mit denen entsprechende Leseeinrichtungen in der Vorrichtung, insbesondere in dem Aufnahmeraum, zusammenwirken, um die Identität des jeweiligen Probentabletts zu bestimmen. Auf diese Weise kann dann nachvollzogen werden, ob ein Probentablett, wie es an der Leseeinrichtung vorbeigeführt wird, dasjenige ist, auf dem die gesuchte Probe befindlich ist. Insbesondere ist es sinnvoll, eine entsprechende Leseeinrichtung im Bereich der vor der Schleuse liegenden Position, an der ein Ein- und Ausschleusen von Probentabletts stattfindet, anzuordnen. Denn so kann in diesem Bereich und vor einem Ausschleusen eines Probentabletts dessen Identität noch einmal überprüft werden, und es kann nach dem Einschleusen eines Probentabletts dessen Identität festgestellt werden mit einer Aufnahme und Speicherung der diesem nun (neu) zugewiesenen Position in dem Tablettstapel.

Ein Verfahren zum Entnehmen eines ausgewählten, eine Probe, insbesondere eine medizinische und/oder biologische Probe, enthaltenden Probengefäßes aus einem eine Entnahmeöffnung aufweisenden Archivraum nach der Erfindung arbeitet wie folgt: In dem Archivraum sind eine Vielzahl von Probengefäßen auf einer Mehrzahl von in zwei nebeneinander angeordneten Stapeln unmittelbar aufeinander gestapelten und individuell aus dem Stapel entnehmenbaren Probentabletts eingelagert. Im Zuge des Verfahrens werden nun wechselweise Probentabletts von einer obersten Position eines ersten Stapels in die oberste Position eines zweiten Stapels überführt und anschließend von einer untersten Position des zweiten Stapels zu einer untersten Position im ersten Stapel. So wird in einem ersten Schritt zunächst ein oberstes Probentablett von dem ersten der zwei Stapel abgehoben und zu dem zweiten Stapel überführt und an dessen oberster. Position auf dem zuvor an oberster Stelle befindlichen Probentablett abgestellt. Anschließend wird ein auf einem in dem zweiten Stapel zuunterst angeordneten Probentablett lastender Teilstapel aus weiteren Probentabletts von diesem zuunterst angeordneten Probentablett abgehoben, und es wird der gesamte erste Stapel angehoben. Danach wird das in dem zweiten Stapel an unterster Position angeordnete Probentablett in die unterste Position in dem ersten Probenstapel überführt, und es wird der zuvor angehobene erste Stapel auf dem nun überführten Probentablett abgesetzt.

Diese Umschichtung von Probentabletts wird so lange durchgeführt, bis ein Ziel-Probentablett, auf dem sich das ausgewählte Probengefäß befindet, sich in einer an die Entnahmeöffnung angrenzenden Position befindet. Anschließend wird ein auf dem Zielprobentablett ggf. noch befindlicher Teilstapel aus darauf auflastenden weiteren Probentabletts von dem Zielprobentablett abgehoben, das Zielprobentablett wird von einem ggf. noch unterhalb desselben angeordneten Teilstapel von Probentabletts abgehoben und durch die Entnahmeöffnung aus dem Archivraum entnommen. Anschließend wird die ausgewählte Probe von dem Zielprobentablett entnommen.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: eine dreidimensionale Ansicht einer erfindungsgemäßen Archivierungsvorrichtung mit ihrer Anbindung an ein automatisches Fördersystem für Probengefäße;
- Fig. 2: in einer perspektivischen Ansicht den Einsatz eines Lager- und Umschichtsystems der Archivierungsvorrichtung gemäß Fig. 1 mit zugeordneter Schleuse;
- Fig. 3: eine Darstellung des Lager- und Umschichtsystems mit zugeordneter Schleuse gemäß Fig. 2 in einer Seitenansicht;
- Fig. 4: ein Probentablett der erfindungsgemäßen Archivierungsvorrichtung;
- Fig. 4a: vergrößert einen Ausschnitt aus dem Probentablett gemäß Fig. 4;
- Fig. 5: einen Ausschnitt aus dem Lager- und Umschichtsystem zur Darstellung eines Hubmittels;
- Fig. 6: in einer Ausschnittsdarstellung die Schleuse mit einem darin befindlichen Probentablett;
- Fig. 7: in nochmals vergrößerter Darstellung den in Fig. 6 durch einen Kreis VII bezeichneten Ausschnitt;
- Fig. 8: eine Ausschnittsdarstellung aus dem Lager- und Umschichtsystem zur Darstellung und Veranschaulichung der darin befindlichen Bahnen; und
- Fig. 9: einen weiteren Ausschnitt aus dem Lager- und Umschichtsystem mit dargestellten Abstellelementen.

In den Figuren ist ein mögliches Ausführungsbeispiel einer erfindungsgemäßen Vorrichtung zum Archivieren einer Vielzahl von in Probengefäßen enthaltenen Proben, nachfolgend auch kurz als "Archivierungsvorrichtung" bezeichnet dargestellt, unter Veranschaulichung einzelner der relevanten Komponenten und Bestandteilen. Dabei sind die Figuren rein schematisch und keinesfalls maßstabsgerecht. Auch sind nicht alle konstruktiven Details gezeigt. Die Darstellung beschränkt sich auf die für die Erfindung und ihre mögliche Umsetzung mit dem Ausführungsbeispiel wesentlichen Komponenten.

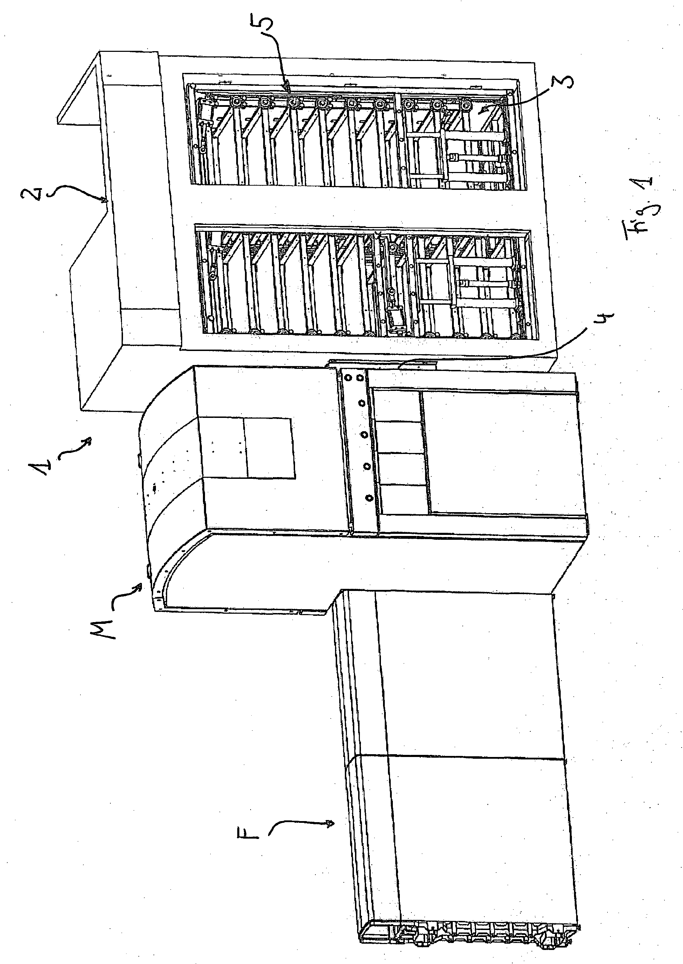

In Fig. 1 ist angebunden an einen hier nur abschnittsweise dargestellten Strang einer automatischen Förderanlage F zum Fördern von insbesondere vereinzelten Probengefäßen ein Ausführungsbeispiel einer erfindungsgemäßen Archivierungsvorrichtung dargestellt und mit 1 bezeichnet. Bestandteil der Archivierungsvorrichtung 1 ist ein Archivschrank 2, der in seinem Inneren den Archivraum 3 beinhaltet. Der Archivschrank 2 ist in diesem Ausführungsbeispiel mit einem (nicht näher dargestellten) Kühlaggregat versehen zum Kühlen des Inneren, also des Archivraumes 3. Der Archivschrank 2 ist hier ein mit einer Doppeltür versehenen, handelsüblicher Gewerbe- bzw. Industriekühlschrank, wie er insbesondere von der Firma Liebherr angeboten wird und in lediglich eine zusätzliche Öffnung für eine Schleuse 4 integriert worden ist. Seitlich an dem Archivschrank 2 angeschlossen, hier nur schemenhaft in der Darstellung links zur erkennen ist die Schleuse 4, über die der Archivraum 3 von außen zugänglich ist. An die Schleuse 4 angeschlossen ist eine Manipulatoreinheit M, die nicht mehr Bestandteil der eigentlichen Archivierungsvorrichtung 1 im engeren Sinne ist. In der Manipulatoreinheit M können einzelne Probengefäße mit entsprechenden Robotern ergriffen und auf Transportfahrzeuge aufgesetzt bzw. von diesen entnommen werden und einsortiert werden in mehrere Aufnahmeöffnungen aufweisende Probenaufnahmen wie insbesondere Probentabletts.

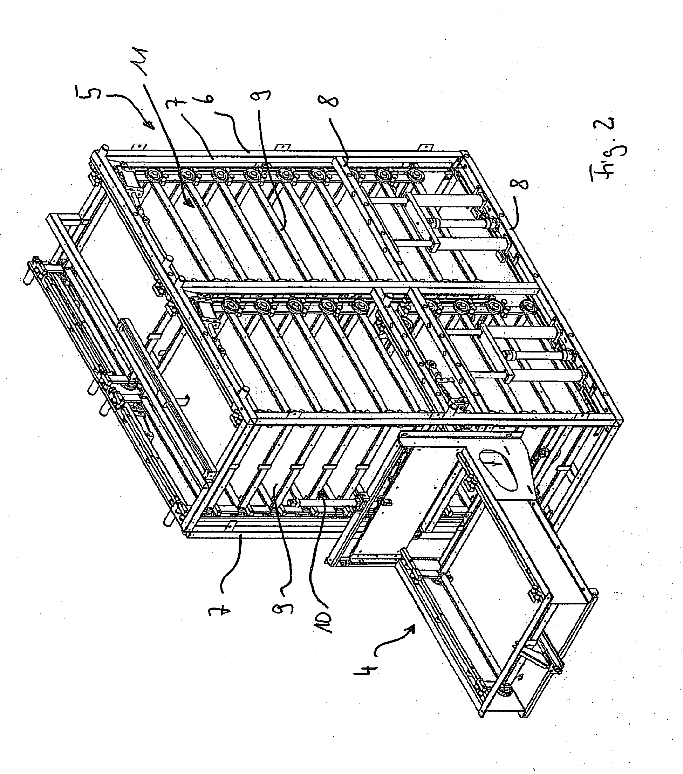

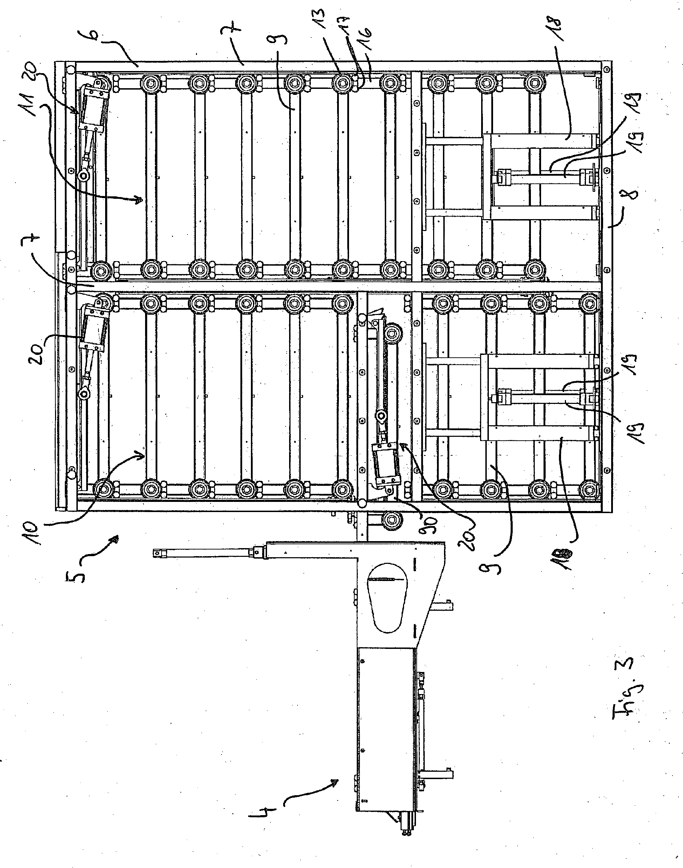

Im Inneren des Archivraumes 3 ist ein Lager- und Umschichtsystem 5 angeordnet. Dieses ist in den nachfolgenden Figuren 2 und 3 noch einmal losgelöst von dem Archivschrank 2 dargestellt und wird im Nachfolgenden anhand dieser Darstellungen erläutert. Das Lager- und Umschichtsystem 5 weist zunächst eine Rahmenkonstruktion 6 mit Vertikalstreben 7 und Horizontalstreben 8 auf. Innerhalb dieser Rahmenkonstruktion 6 ist ein Aufnahmeraum geschaffen für Probentabletts 9. Diese Probentabletts sind in dem Aufnahmeraum in zwei aneinander angrenzenden Stapeln 10, 11 unmittelbar aufeinander geschichtet. Dabei ist der Stapel 10 derjenige Stapel, in welchem die Probentabletts 9 mit ihren in den Figuren links dargestellten Stirnseiten an die Stirnwand der Rahmenkonstruktion 6 anstoßen, an der die Schleuse 4 angeordnet ist. Der Stapel 11 liegt auf der der Schleuse 4 abgewandten Seite.

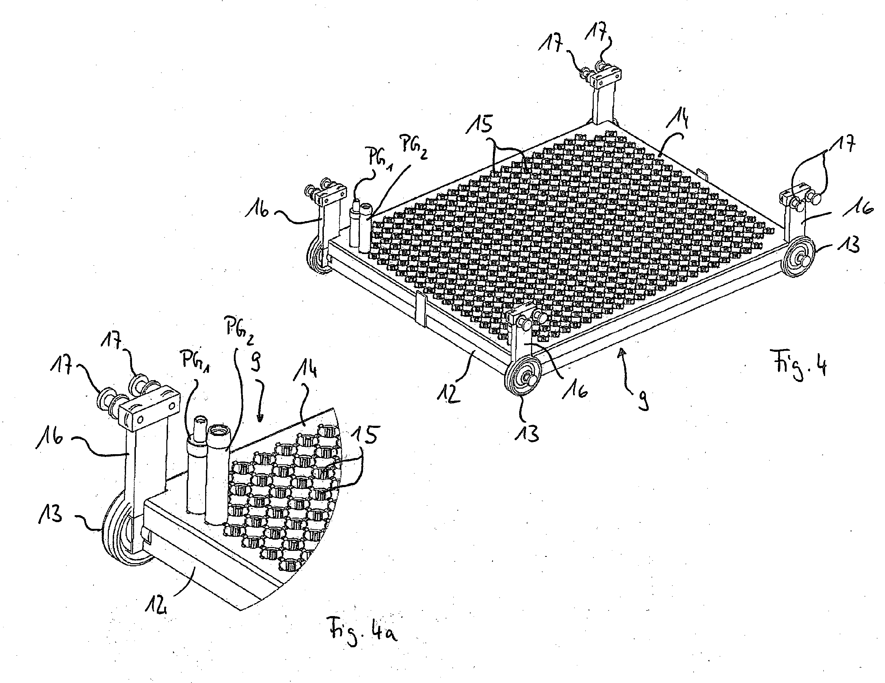

Die Probentabletts 9 werden nun zunächst anhand der Figuren 4 und 4a eingehender beschrieben, wo ein solches Probentablett in Fig. 4 dargestellt und in Fig. 4a noch einmal mit einem vergrößerten Ausschnitt veranschaulicht ist. Die Probentabletts 9, die grundsätzlich Bestandteil des Lager- und Umschichtsystems 5 sind, sind in diesem System insgesamt gleich, insbesondere identisch, gebildet. Sie verfügen über einen Grundrahmen 12, der eine rechteckige Innenfläche umspannt und an welchem an den vier Eckpositionen jeweils nach einer Unterseite vorstehende Rollen bzw. Räder 13 angeordnet sind. Auf dem Grundrahmen 12 aufgelegt ist eine Aufnahmefläche 14, entlang derer in Zeilen und Reihen dicht gepackt Aufnahmeöffnungen 15 zur Aufnahme jeweils eines einzigen röhrchenförmigen Probengefäßes angeordnet sind. Zur Veranschaulichung sind zwei Probengefäße PG₁ und PG₂ in zwei Aufnahmeöffnungen 15 der Aufnahmefläche 14 angeordnet dargestellt. Dabei lässt sich gut erkennen, dass die Probengefäße PG₁ und PG₂ deutlich über die Oberfläche der Aufnahmefläche 14 hinaus nach oben, also der Seite der Aufnahmefläche 14, die über den Rollen bzw. Räder 13 liegt, erstrecken.

Ferner zu erkennen sind im Bereich der vier Ecken der rechteckigen Fläche des Grundrahmens 12 bzw. der Aufnahmefläche 14 nach oben vorstehende Streben 16. Am oberen Ende jeder Strebe 16 ist ein Paar aus mit ihren Drehachsen parallel zueinander und parallel zu der Aufnahmefläche 14 und jeweils in gleichem Abstand zu derselben angeordneten Rollen 17 angeordnet. Die Positionen der Rollen 17 sind dabei derart, dass in den Zwischenraum zwischen den Rollen 17 hinein bei ausgerichtet übereinander gestellten Probentabletts 9 jeweils eine Rolle bzw. ein Rad 13 eines auf einem ersten Probentablett 9 abgestellten zweiten Probentabletts 9 hinein passt und in dem Zwischenraum derart aufgenommen wird, dass es sicher und horizontal unverrückbar gehalten ist. Diese Art des Stapelns ist insbesondere in Fig. 3 gut zu erkennen. Dabei sind die Streben 16 und die Rollen 17 und 13 derart bemessen, dass die Aufnahmefläche 14 eines im Stapel 10 bzw. 11 oberhalb eines weiteren Probentabletts 9 befindlichen Probentabletts 9 mit seiner Unterseite einen ausreichenden Abstand zu der Oberseite der Aufnahmefläche 14 des darunter angeordneten Probentabletts 9 aufweist, als dass die in den Aufnahmeöffnungen 15 angeordneten Probengefäße, beispielsweise PG₁ und PG₂ nicht an die Unterseite der Aufnahmefläche 14 des oberen Probentabletts 9 anstoßen. Vielmehr besteht hier ein ausreichendes Spiel bzw. ein ausreichender Freiraum.

Unter nochmaliger Bezugnahme auf die Figuren 2 und 3 können in dem dort gezeigten Lager- und Umschichtsystem 5 zwei Hubmittel 18 erkannt werden, eines in seitlicher Anordnung im Bereich des Stapels 10, eines in seitlicher Anordnung im Bereich des Stapels 11. Jedes der gezeigten Hubmittel 18 setzt sich zusammen aus einem Paar von einander gegenüberliegend über die Schmalseite der in den Stapeln 10 bzw. 11 angeordneten Probentabletts 9 hinweg angeordneten Hubeinrichtungen 19. Mittels der Hubeinrichtungen 19 können die Stapel mit den Probentabletts 9 in vertikaler Richtung angehoben werden. Darüber hinaus sind im Bereich gegenüberliegend der Schleuse 4 sowie an den oberen Enden Transfermittel 20 dargestellt, wobei auch in dem unteren Bereich der Rahmenkonstruktion 6 Transfermittel vorhanden sind, die hier nicht näher dargestellt sind. Mittels der Transfermittel können einzelne der Probentabletts 9 in horizontaler Richtung von einer Position in eine andere, insbesondere von einem Stapel 10 in den anderen Stapel 11 bzw. in umgekehrter Richtung oder von dem Stapel 10 in Richtung der Schleuse 4 überführt werden. In Fig. 3 ist dies angedeutet, wenn dort beispielsweise eine Position dargestellt ist, in der gerade ein Probentablett 90 in Richtung der Schleuse 4 bewegt wird. Die Art und Weise, in welcher diese Bewegung erfolgt und die Voraussetzungen dafür werden nachfolgend noch weiter erläutert.

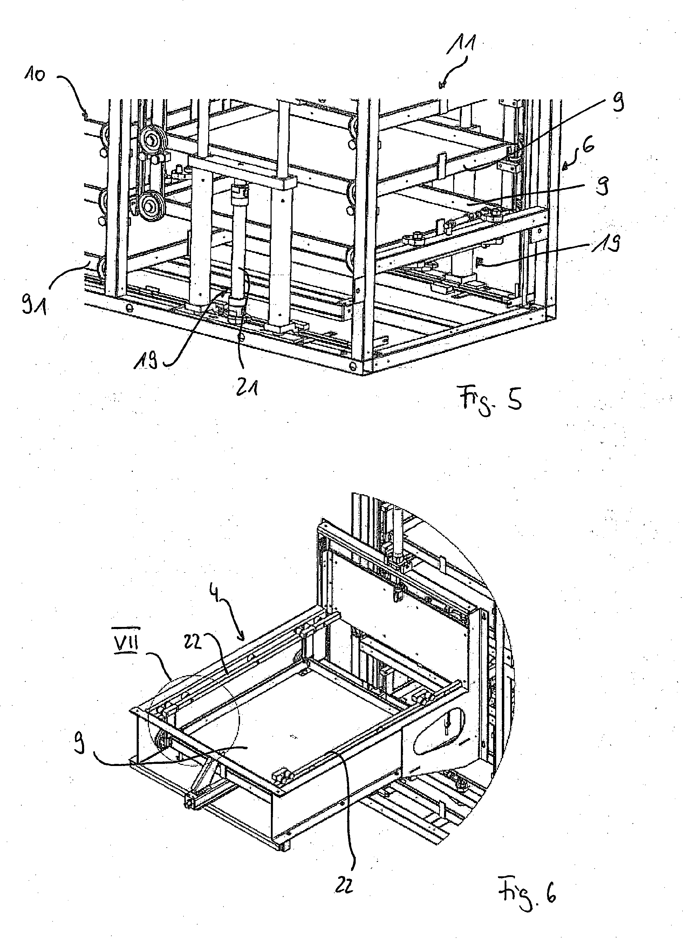

Zunächst ist in Fig. 5 noch einmal in einer vergrößerten Darstellung der untere Bereich der Rahmenkonstruktion 6 dargestellt mit dem dort vorgesehenen Hubmittel 18 bestehend aus den beiden Hubeinrichtungen 19. Die Hubeinrichtungen 19 haben beispielsweise einen hydraulisch betätigten Hubzylinder 21, mit dem ein hier nicht näher dargestelltes Manipulationselement an einem Probentablett 9 angreifen und dieses mit ggf. weiteren darauf abgestellten, gestapelten Probentabletts 9 empor heben kann. So ist in Fig. 5 der Stapel 11, der hier nur in einem Ausschnitt dargestellt ist, in einer Position dargestellt, in welcher er insgesamt angehoben ist. D.h. das unterste Probentablett 9 dieses Stapels 11 ruht nicht mehr auf dem Grund der Rahmenkonstruktion 6, sondern befindet sich in vertikaler Richtung nach oben verlagert. In dieser Position kann nun ein unterstes Probentablett 91 aus dem nur andeutungsweise dargestellten Stapel 10, von dem (in der zeichnerischen Darstellung noch nicht geschehen) das nächst obere Probentablett abgehoben ist, überführt werden in die unterste Position des Stapels 1 1 , indem es mit dem nicht näher dargestellten Transfermittel, z.B. einem Druckzylinder, verschoben wird und auf den Rollen 13 entlang rollt bis in die unterste Position des Stapels 11. Sodann kann mit dem Hubeinrichtungen 19 der Stapel 11 wieder abgelassen werden, so dass das zuvor in diesem Stapel unterste Probentablett mit seinen Rädern 13 auf dem nun überführten Probentablett 91, genauer auf den zuoberst an den Streben 16 dieses Probentabletts 91 angeordneten Rollen 17 bzw. in deren Zwischenräumen sitzt und sicher abgestellt ist.

Sodann wird der Stapel 10 mit dem nun zuletzt zweituntersten Probentablett, welches das unterste Probentablett geworden ist, abgesetzt auf dem Grund der Rahmenkonstruktion 6 bzw. auf der untersten Position des durch diese Rahmenkonstruktion 6 begrenzten Aufnahmeraumes.

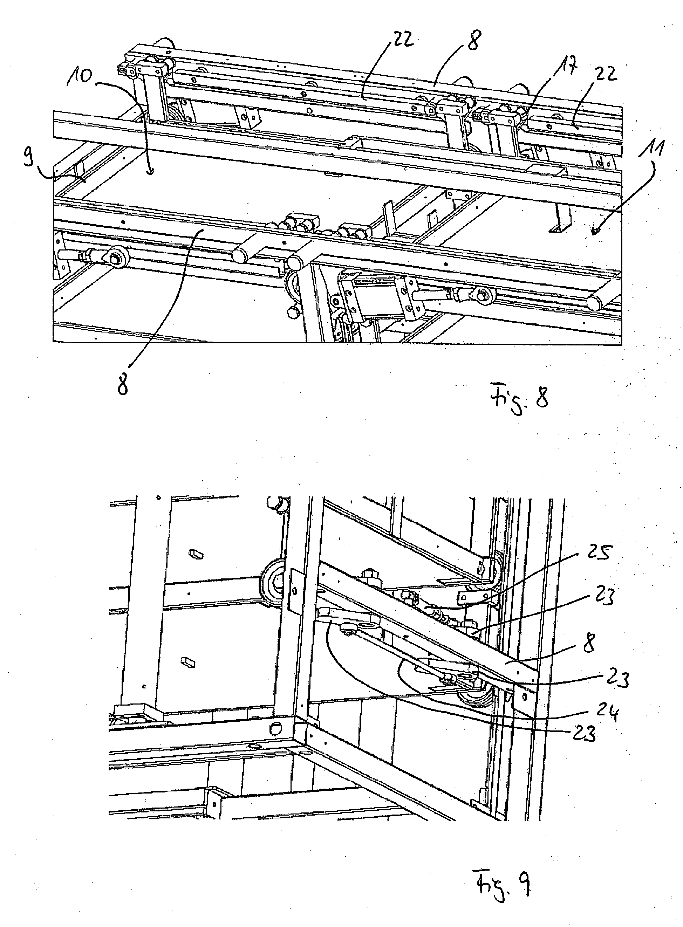

In ähnlicher Weise wird an einer obersten Position verfahren, die in Fig. 8 dargestellt ist. Dort sind an den Horizontalstreben 8 der Rahmenkonstruktion 6 angeordneten Schienen 22 zu erkennen, auf denen die Rollen 17 der obersten Probentabletts 9 laufen können. Die Schienen 22 sind dabei in dem Bereich, in welchem die Rollen 17 laufen, unterbrochen, wobei diese Unterbrechungen durch verlagerbare Schienenabschnitte (hier nicht näher dargestellt) ausgefüllt und die Schienen 22 so vervollständigt werden können. Ist nun in einem der Stapel, insbesondere dem Stapel 10 die oberste Position mit einem Probentablett 9 nicht besetzt (in der Figur also das dort zuoberst dargestellte Probentablett 9 nicht vorhanden, so kann, wenn dieses von den darunter liegenden Probentabletts 9 gelöst, der weitere Stapel 11 also um ein Maß abgesenkt ist, ein oberstes Probentablett 9 aus dem Stapel 11 durch Verschieben entlang der durch Verlagern der verlagerbaren Elemente geschlossen Schienen 22 in die oberste Position des Stapels 10 überführt werden. Erfolgt eine solche Überführung, nachdem an der untersten Position wie zuvor anhand der Figur 5 beschrieben ein Transfer eines Probentabletts 91 vom Stapel 10 in den Stapel 11 überführt ist, und werden diese Vorgänge wiederkehrend wiederholt, so erfolgt eine stückweise Umschichtung der Probentabletts 9 in den Stapeln 10, 11 in einem Kreislauf, hier in Aufsicht auf die Fig. 3 gesehen, entgegen dem Uhrzeigersinn. Bei einer umgekehrten Verlagerungsrichtung kann ein Kreislauf im Uhrzeigersinn eingestellt werden.

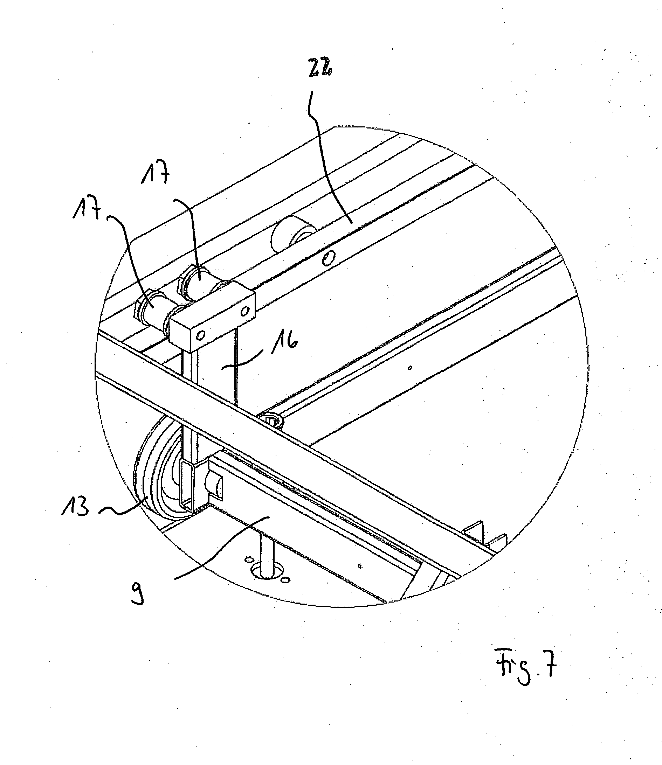

In den Figuren 6 und 7 ist zu erkennen, wie eine Überführung eines Probentabletts 9 in die Schleuse 4 geschieht. Auch dort sind nämlich Schienen 22 angeordnet, auf denen die Rollen 17 an den oberen Enden der Streben 16 entlang rollen können. Um ein solches Probentablett 90 (vgl. Fig. 3) aus dem Stapel 10 entnehmen und in die Schleuse 4 überführen zu können, werden die auf diesem Probentablett 90 auflastenden weiteren Probentabletts 9 in dem Probenstapel 10 angehoben mittels der diesem Stapel 10 zugeordneten Hubmittel 18. Ferner wird das Probentablett 90 selbst ein Stück weit angehoben und es werden die Schienen 22, die auch in dem mittleren Bereich in Flucht zu den Schienen 22 der Schleuse 4 angeordnet sind, durch Einbringen der verlagerbaren Abschnitte vervollständigt, so dass das Probentablett 90 mittels der dort angeordneten Transfermittel aus dem Stapel 10 heraus verfahren und in die Schleuse 4 verbracht werden kann.

Die verlagerbaren Abschnitte der Schienen 22 liegen dabei an Positionen, an denen sich in den Stapeln 10 bzw. 11 die Räder bzw. Rollen 13 und die Rollen 17 sowie die Streben 16 befinden. In einer normalen Parkposition geben sie den Abschnitt in den Schienen 22 frei, an denen die Rollen bzw. Räder 13, 17 entlang in vertikaler Richtung sich bewegen, so dass diese die Schienen 22 passieren können. Erst wenn die verlagerbaren Abschnitte aus der Parkposition in eine Position verbracht werden, in denen sich die Schienen 22 vervollständigen, hintergreifen die Rollen 17 die Schienen 22 und werden an diesen gehalten. Auf diese Weise kann ein Probentablett 9, welches mit seinen Rollen 17 in eine Position oberhalb einer Schiene 22 gebracht worden ist und für welches der verlagerbare Abschnitt der Schienen 22 geschlossen ist, in dieser Position gehalten werden, auch wenn die Hubmittel 18 den jeweils angehobenen Stapel 10 bzw. 11 wieder absenken. Somit wird nicht allein die Schienen 22 für einen in horizontaler Richtung stattfindenden Transfer geschlossen, es wird zugleich das zu bewegende Probentablett von den restlichen Probentabletts 9 in dem Stapel getrennt, so dass es überhaupt aus dem Stapel 10 bzw. 11 heraus bewegt werden kann, entweder in den anderen Stapel 11 bzw. 10 oder aber in die Schleuse 4.

Eine weitere Möglichkeit, Probentabletts 9 auf einer angehobenen Höhe zu halten, ist ebenfalls vorgesehen. Wie in Fig. 9 zu erkennen, sind an einigen der stirnseitigen Horizontalstreben 8 verschwenkbare Riegelstücke 23 angeordnet, die über ein Gestänge 24 gekoppelt sind. Über einen pneumatisch oder hydraulisch aktivierbaren Zylinder 25 können die Riegelstücke 23 aus einer Ruheposition, in welcher sie weitgehend parallel zu der Horizontalstrebe 8 liegen, verschwenkt werden in eine schräg dazu verlaufende Position. Dabei werden die Riegelstücke 23 mit freien Enden in den Bewegungsraum der Probentabletts 9 hineingeschwenkt und bilden so auf der Unterseite eine Ablage, wobei weitere Riegelstücke 23 auf der Oberseite das Probentablett 9 verriegeln. Ist ein Stapel, z.B. der Stapel 11, einmal insgesamt oder aber mit einem Teilstapel auf den Riegelstücken 23 abgestellt, kann mit dem Hubmittel 18 ein weiterer Teilstapel abgehoben werden. Alternativ kann ein Abstellen des Stapels auf den Riegelstücken 23 auch lediglich einer Entlastung der Hubmittel 18 dienen.

Aus der obigen Beschreibung dürfte klar geworden sein, dass ein wesentlicher Vorteil und ein Kernmerkmal der Erfindung darin besteht, dass im Lager- und Umschichtsystem 5 des Archivschrankes 2 einzelne Probentabletts 9 unmittelbar aufeinander abgestellt sind, wobei unter Zuhilfenahme der Hub- und Transfermittel jeweils aus beliebiger Position Probentabletts 9 vor die Schleuse verbracht, entnommen und ausgeschleust bzw. ein Probentablett in beliebige Positionen, d.h. hier zwischen ein beliebiges Paar aus zuvor aufeinander gestapelten Probentabletts 9, in den Stapel 10 eingeschleust werden können. Um ein gewünschtes Probentablett in einen Bereich gegenüber der Schleuse 4 zu bewegen, werden die Probentabletts 9 in der oben beschriebenen Weise durch jeweils Überführen einzelner Probentabletts in der untersten bzw. obersten Position von dem einen in den anderen Stapel sukzessive umgeschichtet, bis das gewünschte Probentablett sich gegenüber der Schleuse 4 befindet und durch Abheben von Teilstapeln und Separieren von einem darunter liegenden Probentablett vereinzelt und dann mittels des Transfermittels in die Schleuse 4 überführt werden kann.

Zu dem Archivierungssystem 1 gehört gemäß diesem Ausführungsbeispiel auch noch eine hier nicht näher dargestellte Steuerung, die insbesondere eine Speichereinrichtung aufweist, in der die Positionen einzelner Probentabletts gespeichert sind wie auch die Positionen einzelner Probengefäße auf den Probestabletts. Somit kann unter Rückgriff auf diese Daten die Steuerung eine automatische Umschichtung der Probentabletts in dem Archivraum 3 veranlassen, solange, bis das Probentablett, welches die gesuchte Probe trägt, gegenüberliegend der Schleuse angelangt ist und ausgeschleust werden kann. Unterstützend kann die Archivierungsvorrichtung 1 auch noch mit einem Probentabletterkennungssystem ausgestattet sein, wozu jedes Probentablett eine eindeutige Identifizierung tragen und in dem Archivraum 3 entsprechende Leseeinrichtung zum Auslesen der Identifizierungskennungen angeordnet sein können.

### Bezugszeichenliste

- 1: Archivierungsvorrichtung
- 2: Archivschrank
- 3: Archivraum
- 4: Schleuse
- 5: Lager- und Umschichtsystem
- 6: Rahmenkonstruktion
- 7: Vertikalstrebe
- 8: Horizontalstrebe
- 9: Probentablett
- 10: Stapel
- 11: Stapel
- 12: Grundrahmen
- 13: Rolle bzw. Rad
- 14: Aufnahmefläche
- 15: Aufnahme
- 16: Strebe
- 17: Rolle
- 18: Hubmittel
- 19: Hubeinrichtung
- 20: Transfermittel
- 21: Hubzylinder
- 22: Schiene
- 23: Riegelstück
- 24: Gestänge
- 25: Zylinder
- 90: Probentablett
- 91: Probentablett
- F: Förderanlage
- M: Manipulatoreinheit
- PG₁: Probengefäß
- PG₂: Probengefäß

## Patentansprüche

1. Vorrichtung zum Archivieren einer Vielzahl von in Probengefäßen (PG₁, PG₂) enthaltenen Proben, insbesondere medizinischen und/oder biologischen Proben, mit einem über eine Schleuse (4) zum automatischen Ein- und Ausschleusen von Probengefäßen (PG₁, PG₂) zugänglichen Archivraum (3) und einem in dem Archivraum (3) angeordneten Lager- und Umschichtsystem (5) für Probengefäße (PG₁, PG₂), welches Probentabletts (9, 90, 91), wobei die Probentabletts (9, 90, 91) Stapeleinrichtungen (13, 16, 17) aufweisen, auf welchen zum Bilden eines Probentablettstapels (10, 11) jeweils ein weiteres Probentablett (9, 90, 91) unter Belassung eines Abstandes zu der Aufnahmefläche (14) des darunter liegenden Probentabletts (9, 90, 91) abstellbar ist, wobei in dem Lager- und Umschichtsystem (5) Aufnahmeraum für wenigstens zwei angrenzend nebeneinander angeordnete Probentablettstapel (10, 11) vorgesehen ist und zwei derart nebeneinander angeordnete Probentablettstapel (10, 11) vorhanden sind, wobei das Lager- und Umschichtsystem (5) zudem Hubmittel (18) zum vertikalen Abheben von einem oder mehreren auf einem ausgewählten Probentablett (9, 90, 91) aufgestapelten weiteren Probentablett(s) (9, 90, 91) von dem ausgewählten Probentablett (9, 90, 91) sowie Transfermittel (20) zum horizontalen Überführen eines Probentabletts (9, 90, 91) von einem in den anderen Stapel (10, 11) und/oder von einem der Stapel (10) in die Schleuse (4) und/oder von der Schleuse (4) in einen der Stapel (10) aufweist, wobei die Transfermittel (20) wenigstens eine Bahn (22), an den Probentabletts (9. 90. 91) angeordnete Rollen (13, 17) und Mittel zum Verschieben eines mit Rollen (13, 17) auf der Bahn (22) ruhenden Probentabletts (9, 90, 91) entlang der Bahn (22) aufweisen, **dadurch gekennzeichnet, dass** die Probentabletts (9, 90, 91) jeweils eine Vielzahl von auf einer Aufnahmefläche (14) angeordneten Aufnahmen (15) für Probengefäße (PG₁, PG₂), insbesondere für jeweils ein Probengefäß (PG₁, PG₂), aufweisen und dass die Probentabletts (9, 90, 91) als Stapeleinrichtungen (13, 16, 17) im wesentlichen senkrecht zu der Aufnahmefläche nach oben weisende Streben (16) aufweisen, an deren oberen Enden jeweils ein unter Belassung eines Zwischenraumes zueinander mit parallelen Drehachsen, die jeweils einen gleichen Abstand zu der Aufnahmefläche aufweisen, ausgerichtetes Rollenpaar aus Rollen (17) angeordnet ist und dass die Probentabletts (9, 90, 91) an einer Unterseite angeordnete Rollen (13) aufweisen, die derart positioniert und dimensioniert sind, dass diese auf der Unterseite angeordneten Rollen (13) beim Aufsetzen eines Probentabletts (9, 90, 91) auf ein anderes Probentablett (9, 90, 91) zur Stapelbildung so auf den an den Streben (16) angeordneten Rollenpaaren zu liegen kommen, dass jeweils eine der an der Unterseite angeordneten Rollen (13) eines oberen Probentabletts (9, 90, 91) in dem Zwischenraum zwischen den Rollen (17) eines Rollenpaares an der Strebe (16) eines unteren Probentabletts (9, 90, 91) ruht und darin gegen ein horizontales Verlagern des oberen Probentabletts (9, 90, 91) gesichert gehalten wird.

2. Vorrichtung nach Anspruch 1, **gekennzeichnet durch** Bahnen (22), auf denen die Rollen (13, 17) laufen, als Bestandteile der Transfermittel.

3. Vorrichtung nach Anspruch 2, **dadurch gekennzeichnet, dass** die Bahnen (22) verlagerbare Abschnitte aufweisen, die bei einer Aktivierung des Transfermittels zum horizontalen Überführen eines Probentabletts (9, 90, 91) zum Vervollständigen der Bahnen (22) verlagert werden, ansonsten in einer Parkposition, in der die Bahnen (22) unterbrochen sind, ruhen.

4. Vorrichtung nach einem der vorhergehenden Ansprüche, **dadurch gekennzeichnet, dass** in dem Lager- und Umschichtsystem (5) Hub- (18) und Transfermittel (20) jeweils in einem oberen und einem unteren Bereich des Aufnahmeraumes so angeordnet sind, dass von den beiden Stapeln (10, 11) mit Probentabletts (9, 90, 91) jeweils ein oberstes Probentablett (, 9, 90, 91) von den weiteren Probentabletts (9, 90, 91) in dem jeweiligen Stapel (10, 11) abgehoben und in den jeweils anderen Stapel (11, 10), insbesondere dort an eine oberste Position, überführt werden kann und dass in beiden Stapeln (10, 11) jeweils die auf einem untersten Probentablett (9, 90, 91) auflastenden weiteren Probentabletts (9, 90, 91) und/oder der gesamte Stapel (10, 11) abgehoben und ein unterstes Probentablett (9, 90, 91) aus einem Stapel (10, 11) in den anderen Stapel (11, 10), insbesondere an dessen unterste Position überführt werden kann.

5. Vorrichtung nach einem der vorhergehenden Ansprüche, **dadurch gekennzeichnet, dass** im Bereich des der Schleuse (4) zugewandten Stapels (10) von Probentabletts (9, 90, 91) in einem in vertikaler Richtung gesehen mittleren Abschnitt Hub- und Transfermittel derart angeordnet sind, dass mit den Hubmitteln (18) ein oberhalb eines in einer Ausgabeposition vor der Schleuse befindlichen Probentabletts (9, 90, 91) befindliches weiteres Probentablett (9, 90, 91) bzw. mehrere solcher weiteren Probentabletts (9, 90, 91) angehoben und ein in der Ausgabeposition befindliches Probentablett (9, 90, 91) von einem darunter befindlichen Probentablett (9, 90, 91) abgehoben und gelöst werden und anschließend mit den Transfermitteln durch die Schleuse (4) ausgeschleust werden kann bzw. dass durch Anheben eines Teilstapels von Probentabletts (9, 90, 91) mittels der Hubmittel in der Ausgabeposition ein Freiraum geschaffen und mittels der Transfermittel durch die Schleuse (4) ein Probentablett (9, 90, 91) in diesen Freiraum verschoben werden kann.

6. Vorrichtung nach einem der vorhergehenden Ansprüche, **gekennzeichnet durch** aktivier- und deaktivierbare Abstellelemente (23) zum temporären Abstellen eines mit dem Hubmittel (18) angehobenen Probentablett(teil-)stapels (10, 11).

7. Vorrichtung nach einem der vorhergehenden Ansprüche, **dadurch gekennzeichnet, dass** sie eine Kühlung aufweist, zum Kühlen des Archivraums (3).

8. Vorrichtung nach einem der vorhergehenden Ansprüche, **gekennzeichnet durch** eine Steuerung mit einem Speicher zum Speichern der jeweiligen Position eines Probengefäßes (PG₁, PG₂) auf einem zugehörigen Probentablett (9, 90, 91) sowie der Position des zugehörigen Probentabletts (9, 90, 91) in den Probentablettstapeln (10, 11).

9. Vorrichtung nach einem der vorhergehenden Ansprüche, **gekennzeichnet durch** individualisierende Identifikationsmarkierungen auf den Probentabletts (9, 90, 91) und wenigstens eine Leseeinrichtung zum Erkennen der Identifikationsmarkierungen im Aufnahmeraum.

## Claims

1. A device for archiving a plurality of samples contained in sample vessels (PG1, PG2), in particular medical and/or biological samples, with an archiving room (3) accessible via a lock (4) for automatic inlet and outlet of sample vessels (PG1, PG2) therethrough and a storage and rearranging system (5) provided in the archiving room (3) for sample vessels (PG1, PG2), sample trays (9, 90, 91), whereas the sample trays (9, 90, 91) contain stacking devices (13, 16, 17), on which to form a sample tray stack (10, 11) respectively an additional sample tray (9, 90, 91) can be removed by leaving a space with respect to the support surface (14) of the underlying sample tray (9, 90, 91), whereas in the storage and rearranging system (5) a receiving chamber is provided for at least two adjoining sample tray stacks (10, 11) and two adjoining sample tray stacks (10, 11) are present, whereas the storage and rearranging system (5) comprises moreover lifting means (18) for raising vertically from a selected sample tray (9, 90, 91), one or several additional sample tray(s) (9, 90, 91) stacked on a selected sample tray (9, 90, 91), as well as transfer means (20) for horizontal transfer of a sample tray (9, 90, 91) from one to the other stack (10, 11) and/or from one of the stacks (10) to the lock (4) and/or from the lock (4) into one of the stacks (10), whereas the transfer means (20) contain at least one rail (22), rollers (13, 17) arranged on the sample trays (9, 90, 91) and means for displacing a sample tray (9, 90, 91) resting with rollers (13, 17) on the rail (22), along said rail (22), **characterised in that** the sample trays (9, 90, 91) present respectively a plurality of receptacles (15) for sample vessels (PG1, PG2), receptacles provided on a receiving surface (14), in particular for one sample vessel (PG1, PG2) respectively, and that the sample trays (9, 90, 91) have struts (16) pointing upwards, substantially vertically to the receiving surface, at which upper ends respectively one pair of rollers (17) is arranged, by leaving an intermediate space with respect to each other, with parallel rotational axes, which have respectively the same distance with respect to the receiving surface, and that the sample trays (9, 90, 91) contain rollers (13) provided on a lower side, which are positioned and sized in such a way that said rollers (13) provided on the lower side come to rest on the pairs of rollers arranged on the struts (16), when laying a sample tray (9, 90, 91) on another sample tray (9, 90, 91) to form a stack in such a way that respectively one of the rollers (13) arranged on the lower side, of an upper sample tray (9, 90, 91) rests in the intermediate space between the rollers (17) of a pair of rollers on the strut (16) of a lower sample tray (9, 90, 91) and is maintained securely in place against any horizontal shift of the upper sample tray (9, 90, 91).

2. The device according to claim 1, **characterised by** rails (22) on which the rollers (13, 17) run as parts of the transfer means.

3. The device according to claim 2, **characterised in that** the rails (22) have shiftable sections which are shifted when activating the transfer means for horizontal transfer of a sample tray (9, 90, 91) to complete the rails (22), whereas they rest in a parking position in which the rails (22) are interrupted.

4. The device according to one of the preceding claims, **characterised in that** the storage and rearranging system (5) contains lifting (18) and transfer means (20) respectively in an upper and a lower section of the receiving chamber, that, from both stacks (10, 11) of sample trays (9, 90, 91), respectively the uppermost sample tray (9, 90, 91) can be raised from the additional sample trays (9, 90, 91) in the respective stack (10, 11) and be transferred into the other respective stack (11, 10), in particular there at the uppermost position and that at the level of the stacks (10, 11) respectively the additional sample trays (9, 90, 91) superimposed on the lowermost sample tray (9, 90, 91), and/or the whole stack can be lifted and a lower most sample tray (9, 90, 91) can be transferred from a stack (10, 11) into the other stack (11, 10), in particular at the lowermost position of the latter.

5. The device according to one of the preceding claims, **characterised in that** in the region of the stack (10) of sample trays (9, 90, 91) facing the lock (4), lifting and transfer means are provided in a central section as seen in vertical direction, in such a way that with the lifting means (18) an additional sample tray (9, 90, 91) or several such additional sample trays (9, 90, 91), situated above one sample tray in a discharge position upstream of the lock, can be lifted and a sample tray (9, 90, 91) situated in the discharge position can be lifted and released from a sample tray (9, 90, 91) situated thereunder and can then be taken out through the lock (4) using the transfer means or to be more precise, by lifting a partial stack of sample trays (9, 90, 91) free space can be created by using the lifting means in the discharge position and a sample tray (9, 90, 91) can be moved into said free space through the lock (4) using the transfer means.

6. The device according to one of the preceding claims, **characterised by** actuatable and de-actuatable removing elements (23) for temporary removal of a sample tray (partial) stack (10, 11) lifted using the lifting means (18).

7. The device according to one of the preceding claims, **characterised in that** it has a cooling system for cooling the archiving room (3).

8. The device according to one of the preceding claims, **characterised by** a control unit with a memory for storing the respective position of a sample vessel (PG1, PG2) on a corresponding sample tray (9, 90, 91) as well as the position of the corresponding sample tray (9, 90, 91) in the sample tray stacks (10, 11).

9. The device according to one of the preceding claims, **characterised by** individualising identification markings on the sample trays (9, 90, 91) and at least one reading device for detecting the identification markings in the receiving chamber.

## Revendications

1. Dispositif pour l'archivage d'une pluralité d'échantillons contenus dans des récipients d'échantillon (PG1, PG2), en particulier des échantillons médicaux et/ou biologiques, avec une chambre d'archivage (3) accessible par l'intermédiaire d'un sas (4) pour l'entrée et la sortie automatique de récipients d'échantillon (PG1, PG2) à travers celui-ci et un système de stockage et de réarrangement (5) prévu dans la chambre d'archivage (3) pour récipients d'échantillon (PG1, PG2), des plateaux d'échantillons (9, 90, 91), tandis que les plateaux d'échantillons (9, 90, 91) contiennent des dispositifs d'empilement (13, 16, 17), sur lesquels pour former une pile de plateaux d'échantillons (10, 11) respectivement un plateau d'échantillons (9, 90, 91) supplémentaire peut être retiré en laissant un espace par rapport à la surface de support (14) du plateau d'échantillons sous-jacent (9, 90, 91), alors que dans le système de stockage et de réarrangement (5) une chambre de réception est prévue pour au moins deux piles de plateaux d'échantillons adjacentes (10, 11) et deux piles de plateaux d'échantillons adjacentes (10, 11) sont présentes, tandis que le système de stockage et de réarrangement (5) comprend en outre des moyens (18) pour soulever verticalement à partir d'un plateau d'échantillons sélectionné (9, 90, 91), un ou plusieurs plateau d'échantillons supplémentaires (9, 90, 91) empilés sur un plateau d'échantillons sélectionné (9, 90, 91), ainsi que des moyens de transfert (20) pour le transfert horizontal d'un plateau d'échantillons (9, 90, 91) d'une pile vers l'autre (10, 11) et / ou à partir d'une des piles (10) du sas (4) et/ou à partir du sas (4) dans l'une des piles (10), tandis que les moyens de transfert (20) contiennent au moins un rail (22), des galets (13, 17) disposés sur les plateaux d'échantillons (9, 90, 91) et des moyens pour déplacer un plateau d'échantillons (9, 90, 91) reposant avec des galets (13, 17) sur le rail (22), le long dudit rail (22), **caractérisé en ce que** les plateaux d'échantillons (9, 90, 91) présentent respectivement une pluralité de réceptacles (15) pour récipients à échantillons (PG1, PG2), les récipients prévus sur une surface de réception (14), en particulier pour un récipient d'échantillons (PG1, PG2) respectivement, et que les plateaux d'échantillons (9, 90, 91) présentent des entretoises (16) dirigées vers le haut, sensiblement à la verticale de la surface de réception, aux extrémités supérieures de laquelle respectivement une paire de galets (17) est disposée, en laissant un espace intermédiaire l'un par rapport à l'autre, avec des axes de rotation parallèles, qui présentent respectivement la même distance par rapport à la surface de réception, et que les plateaux d'échantillons (9, 90, 91) comportent des galets (13) prévus sur un côté inférieur, qui sont positionnés et dimensionnés de telle sorte que lesdits galets (13) prévus sur le côté inférieur viennent reposer sur les paires de galets disposés sur les entretoises (16), lors de la pose d'un plateau d'échantillons (9, 90, 91) sur un autre plateau d'échantillons (9, 90, 91) pour former une pile de telle sorte que respectivement l'un des galets (13) disposé sur le côté inférieur, d'un plateau d'échantillons supérieur (9, 90, 91) repose dans l'espace intermédiaire entre les galets (17) d'une paire de galets sur l'entretoise (16) d'un plateau d'échantillons inférieur (9, 90, 91) et est maintenu fermement en place contre toute déplacement horizontal du plateau d'échantillons supérieur (9, 90, 91).

2. Dispositif selon la revendication 1, **caractérisé par** des rails (22) sur lequel les galets (13, 17) coulissent comme parties intégrantes des moyens de transfert.

3. Dispositif selon la revendication 2, **caractérisé en ce que** les rails (22) ont des sections déplaçables qui sont décalées lors de l'activation du moyen de transfert pour le transfert horizontal d'un plateau d'échantillons (9, 90, 91) pour compléter les rails (22), alors qu'ils reposent dans une position de stationnement dans laquelle les rails (22) sont interrompus.

4. Dispositif selon l'une quelconque des revendications précédentes, **caractérisé en ce que** le système de stockage et de réarrangement (5) contient des moyens de levage (18) et de transfert (20) respectivement en une partie supérieure et une partie inférieure de la chambre de réception, qui, à partir de deux piles (10, 11) de plateaux d'échantillons (9, 90, 91), respectivement le plateau d'échantillons le plus élevé (9, 90, 91) peut être soulevé à partir des plateaux d'échantillons supplémentaires (9, 90, 91) dans la pile respective (10, 11) et être transféré dans l'autre pile respective (11, 10), en particulier, à la position la plus haute et que, au niveau des piles (10, 11), respectivement les plateaux d'échantillons supplémentaires (9, 90, 91) superposés sur le plateau d'échantillons le plus bas (9, 90, 91), et/ou l'ensemble de la pile peut être soulevé et un plateau d'échantillons le plus bas (9, 90, 91) peut être transféré à partir d'une pile (10, 11) dans l'autre pile (11, 10), en particulier à la position la plus basse de cette dernière.

5. Dispositif selon l'une quelconque des revendications précédentes, **caractérisé en ce que** dans la région de la pile (10) des plateaux d'échantillons (9, 90, 91) faisant face au sas (4), des moyens de levage et de transfert sont prévus dans une section centrale comme on le voit dans la direction verticale, de telle sorte que les moyens de levage (18) d'un plateau d'échantillons supplémentaire (9, 90, 91) ou plusieurs de ces plateaux d'échantillons supplémentaires (9, 90, 91), situés au-dessus d'un plateau d'échantillons dans une position de décharge en amont du sas peuvent être soulevés et un plateau d'échantillons (9, 90, 91) situé dans la position de décharge peut être soulevé et libéré à partir d'un plateau d'échantillons (9, 90, 91) situé au-dessous de celui-ci et peut alors être extrait prise à travers le sas (4) en utilisant les moyens de transfert ou pour être plus précis en soulevant une pile partielle de plateaux d'échantillons (9, 90, 91), un espace libre peut être créé en utilisant les moyens de levage dans la position de décharge et un plateau d'échantillons (9, 90, 91) peut être déplacé dans ledit espace libre à travers le sas (4) à l'aide des moyens de transfert.

6. Dispositif selon l'une quelconque des revendications précédentes, **caractérisé par** des éléments d'enlèvement actionnables et dé-actionnables (23) pour l'enlèvement temporaire d'une pile (partielle) de plateaux d'échantillons (10, 11) soulevée à l'aide des moyens de levage (18).

7. Dispositif selon l'une quelconque des revendications précédentes, **caractérisé en ce qu'**il comporte un système de refroidissement pour refroidir la chambre d'archivage (3).

8. Dispositif selon l'une quelconque des revendications précédentes, **caractérisé par** une unité de commande avec une mémoire pour stocker la position respective d'un récipient d'échantillons (PG1, PG2) sur un plateau d'échantillons correspondant (9, 90, 91), ainsi que la position du plateau d'échantillons correspondant (9, 90, 91) dans les piles de plateaux d'échantillons (10, 11).

9. Dispositif selon l'une quelconque des revendications précédentes, **caractérisé par** l'individualisation des marques d'identification sur les plateaux d'échantillons (9, 90, 91) et au moins un dispositif de lecture pour détecter les marques d'identification dans la chambre de réception.
